# EUROPEAN PATENT APPLICATION

(11) **EP 2 518 526 A2**
(43) Date of publication of application: **31.10.2012**
(21) Application number: 11194258.7
(22) Date of filing: 19.12.2011
(51) Int. Cl.: G01S 7/52, G01S 7/521

(54) **Ultrasonic sensor**

(30) Priority: 27.04.2011 TW 100114645
(71) Applicant: Tung Thih Electronic Co., Ltd., Luchu (TW)
(72) Inventor: Wu, Wen-Jong, 10617 Taipei (TW); Chen, Chuin-Shan, 10617 Taipei (TW); Lin, Chia-Yu, 33852 Taoyuan County (TW); Tsai, Tzu-Chin, 33852 Taoyuan County (TW); Lee, Shih-Feng, 33852 Taoyuan County (TW); Kuo, Chun-Liang, 10617 Taipei (TW)
(74) Representative: Hancox, Jonathan Christopher

(57) **Abstract**

An ultrasonic sensor includes a casing body (2) and a piezoelectric element (3). The casing body (2) has a base wall (21) and a surrounding wall (22) that cooperates with the base wall (21) to define an interior space (20). The base wall (21) has a top surface (211) and a bottom surface (212). The top surface (211) has a first section (213), a second section (214) that extends between the first section (213) and the surrounding wall (22), and a connecting section (215) interconnecting the first and second sections (213, 214). A distance between the second section (214) and the bottom surface (212) is larger than that between the first section (213) and the bottom surface (212) such that the connecting section (215) and the first section (213) cooperate to define a recess (210). The piezoelectric element (3) is confined in the recess (210).

## Description

The invention relates to a sensor, more particularly to an ultrasonic sensor for mounting on a vehicle to detect distances between the vehicle and surrounding objects.

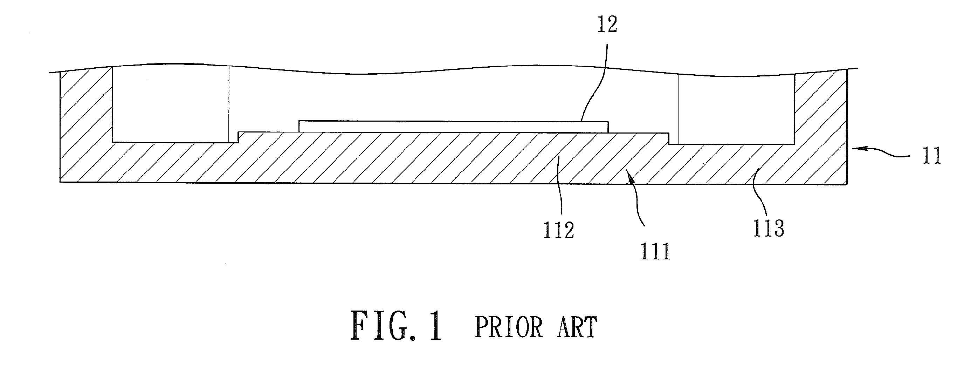

Ultrasonic sensors are capable of measuring location and velocity of objects by transmitting and receiving ultrasonic waves, and are widely utilized in a parking sensing system or a collision preventing system of vehicles. Figure 1 discloses a conventional ultrasonic sensor including a metal casing 11 that defines an interior space and a piezoelectric element 12 disposed in the interior space. The metal casing 11 has a base wall 111 having a thin part 113 and a thick part 112 that is surrounded by the thin part 113 and that protrudes from the thin part 113 into the interior space. The piezoelectric element 12 is mounted on the thick part 112.

In response to an applied voltage change, the piezoelectric element 12 deforms, forcing the base wall 111 to vibrate and transmit ultrasonic wave. The transmitted ultrasonic wave travels, hits an object, and is reflected back to and hits the base wall 111. The resonant vibration of the base wall 111 in turn deforms the piezoelectric element 12, generating an electric signal. The electric signal is received by a back end circuit for analyzing, so as to determine the distance between the ultrasonic sensor and the object.

This sensing mechanism exhibits directivity. That is, the transmitted ultrasonic wave is not uniformly distributed in all directions. The ultrasonic sensor is not able to receive waves uniformly from all directions, and is sensitive in certain directions within certain angles, which is referred to as the directive angle of the sensor. To fit in with various applications, an ultrasonic sensor would be preferably changeable in the directive angle thereof.

The object of the present invention is to provide an ultrasonic sensor that can accomplish different directive angles via change of a casing body structure.

Accordingly, an ultrasonic sensor of the present invention comprises a casing body and a piezoelectric element.

The casing body has a base wall and a surrounding wall that surrounds a rim of the base wall and that cooperates with the base wall to define an interior space. The base wall has a top surface facing the interior space and a bottom surface facing away and spaced apart from the interior space. The top surface has a first section, a second section that extends between the first section and the surrounding wall, and a connecting section interconnecting the first and second sections. A distance between the second section and the bottom surface is larger than a distance between the first section and the bottom surface such that the connecting section and the first section cooperate to define a recess.

The piezoelectric element is disposed on the first section of the casing body and is confined in the recess.

Other features and advantages of the present invention will become apparent in the following detailed description of the preferred embodiment with reference to the accompanying drawings, of which:
Figure 1 is a fragmentary partly sectional view of a conventional ultrasonic sensor;
Figure 2 is a top view of the preferred embodiment of an ultrasonic sensor according to the invention;
Figure 3 is a fragmentary sectional view of the ultrasonic sensor taken along line III-III in Fig. 2;
Figure 4 is a top view illustrating structures of a first section and a second section of the ultrasonic sensor, where the area of the first section is denoted by A1 and the area of the second section is denoted by A2;
Figure 5 is a plot illustrating horizontal directive angles of the ultrasonic sensor under different depths of the recess;
Figure 6 is a plot illustrating different resonant frequencies of the casing body under different depths of the recess;
Figure 7 is a plot drawn in a polar coordinate system, showing a comparison of the horizontal directive angles between this invention and a comparative example;
Figure 8 is a plot showing horizontal directive angles of this invention under different areas of the first section; and
Figure 9 is a plot illustrating the resonant frequency of the sensor under different areas of the first section.

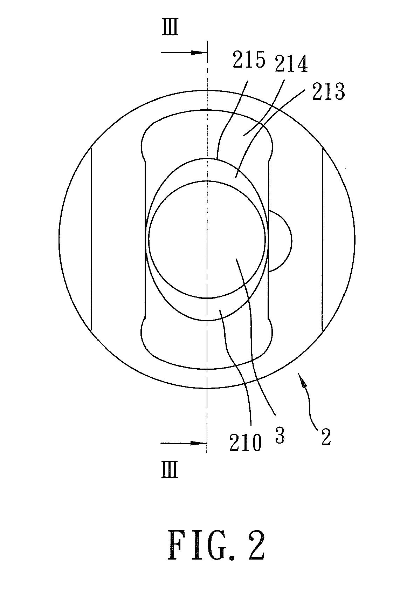

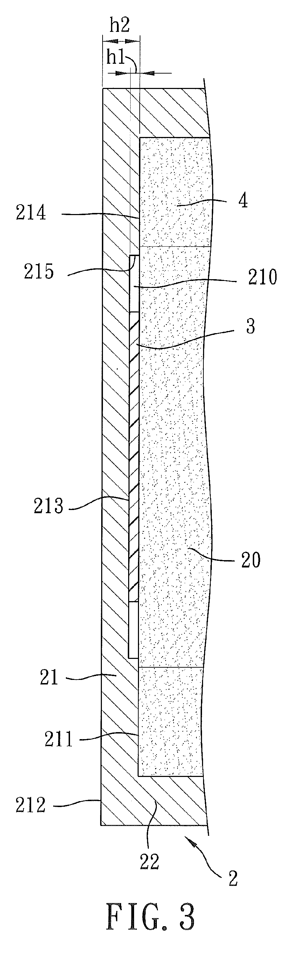

As shown in Figures 2 and 3, the preferred embodiment of an ultrasonic sensor according to the present invention includes a casing body 2, a piezoelectric element 3, and an encapsulant 4.

In this embodiment, the casing body 2 is made of, e.g., aluminum.

The casing body 2 has a base wall 21 and a surrounding wall 22 that surrounds a rim of the base wall 21 and that cooperates with the base wall 21 to define an interior space 20. The base wall 21 is capable of vibrating and transmitting ultrasonic wave. The base wall 21 has a top surface 211 facing the interior space 20 and a bottom surface 212 facing away and spaced apart from the interior space 20.

The top surface 211 has a first section 213, a second section 214 that extends between the first section 213 and the surrounding wall 22, and a connecting section 215 interconnecting the first and second sections 213 and 214. A distance (h2) between the second section and the bottom surface 212 is larger than a distance between the first section 212 and the bottom surface 213 such that the connecting section 213 and the first section 215 cooperate to define a recess 210.

The recess 210 has a depth (h1), and a ratio of h1 to h2 is greater than 0 and not greater than 0.5. Preferably, h1 is greater than 0. 05 mm, such that a better sensing effect can be obtained.

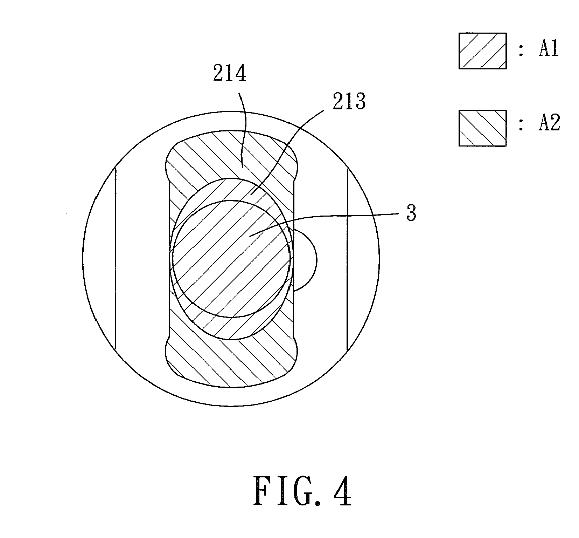

Further referring to Figure 4, the first section 213 has an area (A1), the second section 214 has an area (A2), and a ratio of (A1) to (A1+A2) could range from 0.36 to 0.9. Additionally, the area of the recess 210 must be greater than that of the piezoelectric element 3. Since the existence of the recess 210 is crucial to this invention, the area (A1) can not be equal to (A1+A2).

The piezoelectric element 3 is disposed on the first section 213 of the top surface 211 of the casing body 2 and confined in the recess 210. The piezoelectric element 3 is made of ceramic, and is adapted to deform in response to an applied electric field. The encapsulant 4 is filled into the interior space 20 and covers the piezoelectric element 3, thereby securing the piezoelectric element 3 on the first section 213.

The ultrasonic sensor of this invention also includes elements, e.g., capacitor, wires, etc. Since such elements and the operating mechanism of the ultrasonic sensor of this invention are known to those skilled in the art, relevant descriptions are omitted for the sake of brevity.

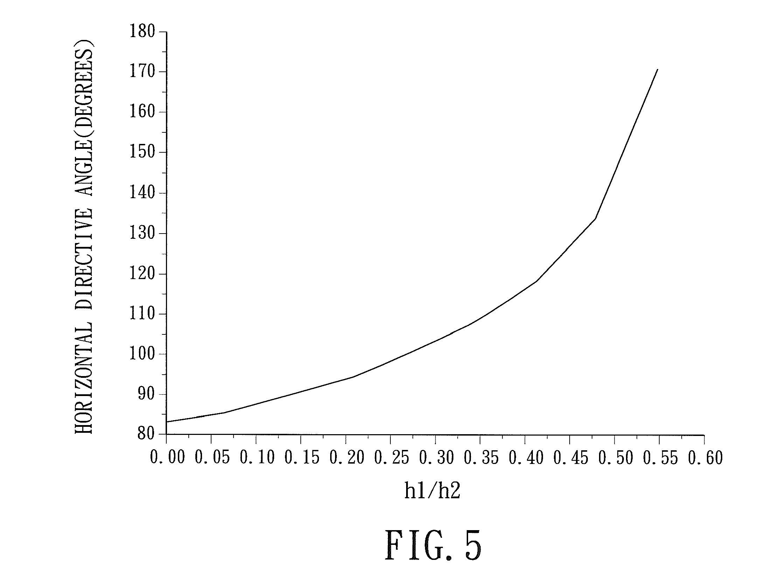

Further reference is made to Figure 5, which illustrates the horizontal directive angles of the ultrasonic sensor of this invention under different ratios of h1/h2. A microphone was placed 30 cm away from the second section 214 of the base wall 21 to obtain sound pressure intensity. In this embodiment, h2, A1, and A2 are 0.8 mm, 35 mm² and 45 mm², respectively.

As shown in Figure 5, when (h1/h2) is zero (i.e., no recess 210 is present), the detected horizontal directive angle is 83 degrees. As the depth (h1) of the recess 210 increases, the detected horizontal directive angle increases as well, reaching 140 degrees when the ratio of h1/h2 is increased to 0.5. The result indicates that, with the presence of the recess 210 and alteration of h1/h2 ratio, a desired horizontal directive angle can be obtained. When the ratio of h1/h2 is greater than 0.5, no horizontal directivity is obtained.

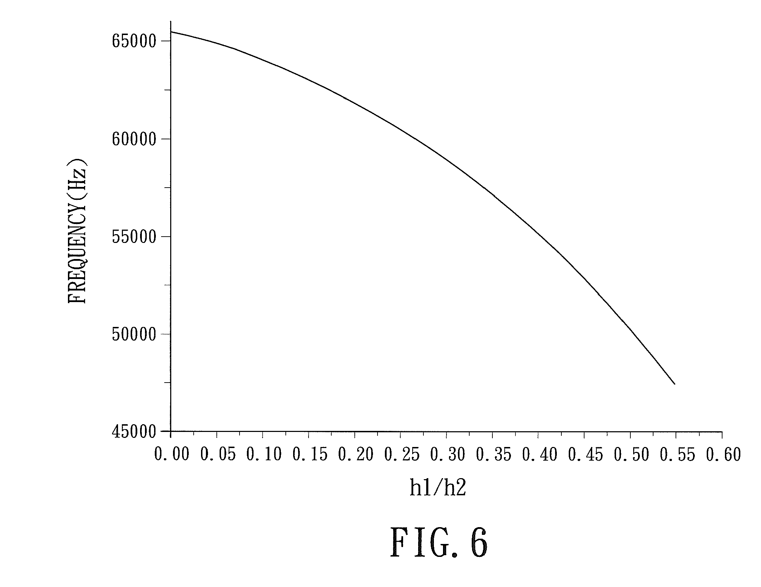

Further reference is made to Figure 6, which illustrates different resonant frequencies of the casing body 2 under different h1/h2 ratios. Generally, the ultrasonic sensor transmits wave at a frequency between 40 to 70 kilohertz. Since a lower resonant frequency exhibits less power loss during wave propagation, a longer propagation distance can be achieved. In Fig. 6, when h1/h2 is 0, the frequency is about 65 kilohertz. As h1/h2 increases, the frequency decreases concurrently. When h1/h2 reaches 0.5, the frequency can drop to around 50 kilohertz.

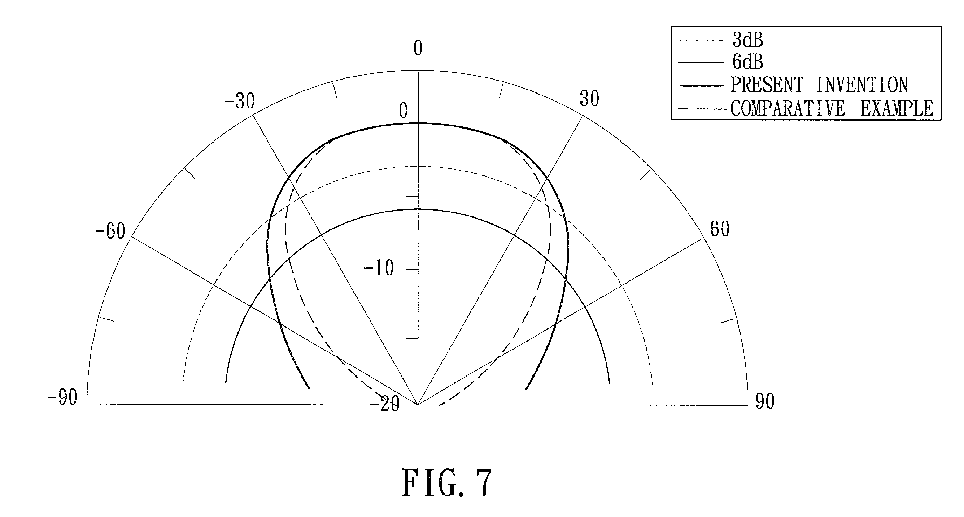

Figure 7 shows a polar coordinate system showing comparison of the horizontal directive angles between the ultrasonic sensor of this invention and a comparative sensor which has no recess structure. The direction in front of the base wall 21 is the polar axis (i.e., the angle is zero degree) , and the sound pressure intensities ranging over angles [-90°, 90°] are measured, denoted by the radial coordinate (r) . For this set of experiments, h1, h2, A1 and A2 of the ultrasonic sensor of this invention are designed to be 0.11mm, 0.64mm, 40mm² and 40mm², respectively. As shown in Fig. 7, the result indicates that, this invention has a larger directive angle than that of the comparative sensor.

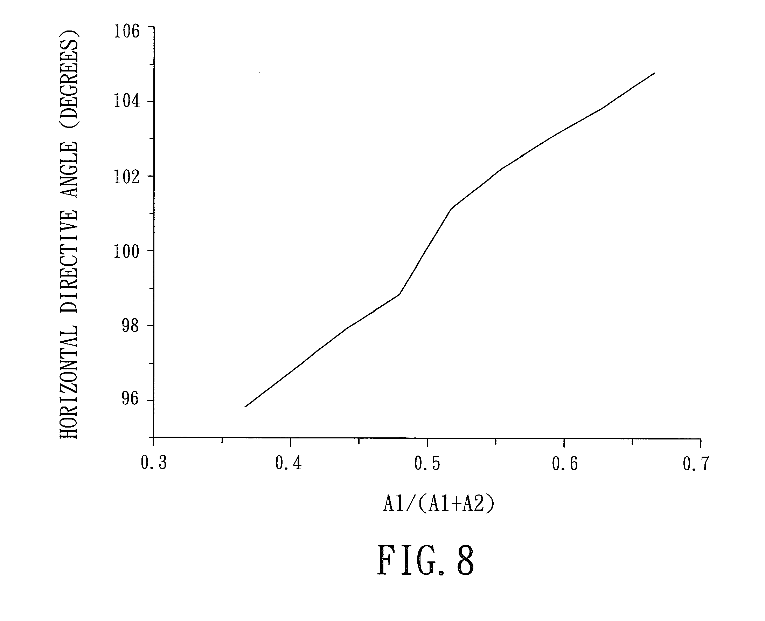

Further reference is made to Figure 8, which illustrates horizontal directive angles of the ultrasonic sensor of this invention under different A1/ (A1+A2) ratios. In this experiment, h1 and h2 are designed to be 0.11mm and 0. 64mm, respectively, and the value of (A1+A2) is fixed. Data indicates that, as the area (A1) of the first section 213 increases, the horizontal directive angle of the sensor increases as well. Thus, by varying (A1), a different horizontal directive angle of the ultrasonic sensor can be obtained. Therefore, based on different requirements, the horizontal directive angle of the ultrasonic sensor can be properly altered by changing the ratio of A1/ (A1+A2).

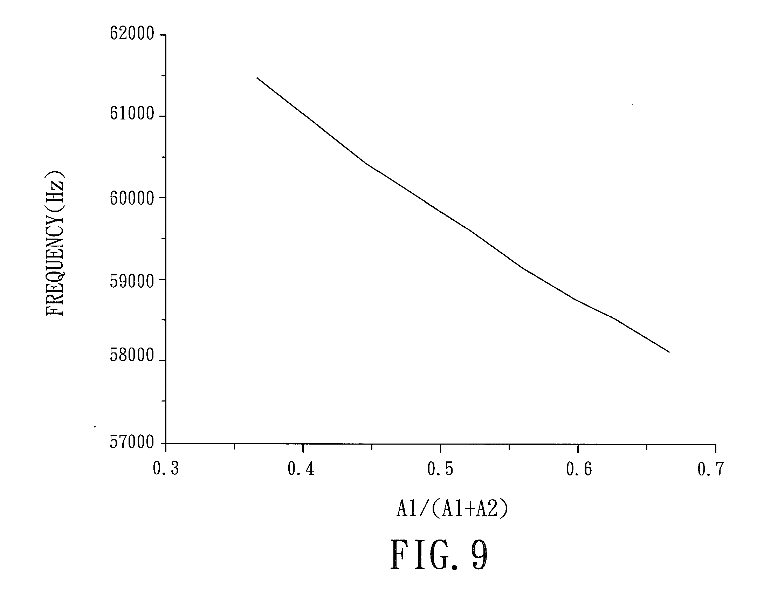

Further reference is made to Figure 9, which illustrates the resonant frequency of the ultrasonic sensor under different A1/ (A1+A2) ratio. The experimental data shows that A1/ (A1+A2) ratio and the resonant frequency of the sensor are negatively related. Within the A1/ (A1+A2) ratio that ranges from 0.36 to 0.9, the resonant frequency is always below 61.5 kilohertz.

To sum up, by virtue of the first and second sections 213, 214, the configuration of disposing the piezoelectric element 3 on the first section 213, and the specific design of the ratios of h1/h2 and A1/ (A1+A2), a desired horizontal directive angle can be obtained for fitting in various applications of the ultrasonic sensor.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. An ultrasonic sensor **characterized by**:
a casing body (2) having a base wall (21) and a surrounding wall (22) that surrounds a rim of said base wall (21) and that cooperates with said base wall (21) to define an interior space (20), said base wall (21) having a top surface (211) facing said interior space (20) and a bottom surface (212) facing away and spaced apart from said interior space (20), said top surface having a first section (213), a second section (214) that extends between said first section (213) and said surrounding wall (22), and a connecting section (215) interconnecting said first and second sections (213, 214), a distance between said second section (214) and said bottom surface (212) is larger than a distance between said first section (213) and said bottom surface (212) such that said connecting section (215) and said first section (213) cooperating to define a recess (210); and
a piezoelectric element (3) disposed on said first section (213) of said casing body (2) and confined in said recess (210).

2. The ultrasonic sensor as claimed in claim 1, further **characterized in that** a ratio of a depth of said recess (210) to a distance between said second section (214) and said bottom surface (212) of said base wall (21) is greater than 0 and not greater than 0.5.

3. The ultrasonic sensor as claimed in any one of the claims 1 and 2, further **characterized in that** said first section (213) has an area (A1), said second section (214) has an area (A2), and a ratio of (A1) to (A1+A2) ranges from 0.36 to 0.9.

4. The ultrasonic sensor as claimed in any one of the claims 2 and 3, further **characterized in that** the depth of said recess (210) is greater than 0.05 mm.
